(19) Europäisches Patentamt
European Patent Office
Office européen des brevets

(11) EP 2 184 524 A2

(12) **EUROPÄISCHE PATENTANMELDUNG**

(43) Veröffentlichungstag:
**12.05.2010 Patentblatt 2010/19**

(51) Int Cl.:
**F16L 11/12** *(2006.01)*          **F16L 11/127** *(2006.01)*
**F16L 53/00** *(2006.01)*

(21) Anmeldenummer: **09013870.2**

(22) Anmeldetag: **04.11.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **05.11.2008 DE 102008055891**

(71) Anmelder: **Masterflex AG**
**45891 Gelsenkirchen (DE)**

(72) Erfinder:
• **Günzing, Hans-Jürgen**
**46240 Bottrop (DE)**
• **Osterholt, Gerd**
**46286 Dorsten (DE)**

(74) Vertreter: **UEXKÜLL & STOLBERG**
**Patentanwälte**
**Beselerstraße 4**
**22607 Hamburg (DE)**

(54) **Flexibler, elektrischer beheizbarer Schlauch**

(57)     Dargestellt und beschrieben ist ein flexibler, elektrisch beheizbarer Schlauch mit einem länglichen elektrischen Leiter, der sich in Schlauchrichtung helixförmig erstreckt. Die Aufgabe, einen flexiblen, elektrisch beheizbaren Schlauch bereitzustellen, bei dem eine über die Schlauchlänge gleichmäßige Beheizung selbst bei starken Verformungen des Schlauchs gewährleistet ist, wird durch einen Schlauch gelöst, der einen länglichen elektrischen Leiter aufweist, der sich in Schlauchrichtung helixförmig erstreckt, wobei der elektrische Leiter in eine Umflechtung eingebettet ist. Die Umflechtung weist dabei erste und zweite Stränge auf, wobei sich die ersten Stränge in Schlauchrichtung helixförmig in gleicher Windungsrichtung wie der elektrische Leiter erstrecken und sich die zweiten Stränge in Schlauchrichtung helixförmig in entgegengesetzter Windungsrichtung zum elektrischen Leiter erstrecken. Der Gangwinkel des sich helixförmig in Schlauchrichtung erstreckenden elektrischen Leiters, der ersten Stränge und der zweiten Stränge beträgt dabei zwischen 50° und 80°.

Fig. 1

EP 2 184 524 A2

**Beschreibung**

Die vorliegende Erfindung betrifft einen flexiblen, elektrisch beheizbaren Schlauch mit einem länglichen elektrischen Leiter, der sich in Schlauchrichtung helixförmig erstreckt.

In einer Vielzahl von Prozessen zur Herstellung oder Förderung von Produkten, der Durchflussmessung flüssiger oder gasförmiger Stoffe, dem Transport von Gasen oder Flüssigkeiten oder von staubförmigen Produkten, sowie der Förderung von Wärmeträgern zur Temperierung von Stoffen durch flexible Schläuche wird die Zufuhr einer externen Wärmemenge erforderlich, um die Temperatur der Stoffe aufrecht zu erhalten oder die Temperatur der Stoffe sogar zu erhöhen.

Die Aufrechterhaltung der Temperatur des in einem Schlauch geführten Mediums ist dabei ein Prozess, bei dem der Anteil der Wärmeenergie, der aufgrund fehlender oder unzureichender thermischer Isolation nach außen strömt und verloren geht, durch eine geeignete äußere Wärmezufuhr kompensiert werden muss.

Thermische Isoliermaterialien können physikalisch den Wärmeverlust ausgehend von einer beheizten Oberfläche nicht vollständig verhindern, sondern nur reduzieren. Das Maß der Reduktion hängt ab von der Stärke der Isolierung und vom spezifischen Wärmeleitwert des Isoliermaterials. Eine zu große Schichtdicke des Isoliermaterials schränkt allerdings die Beweglichkeit eines Schlauchsystems in erheblichem Maß ein.

Neben der thermischen Isolierung kann zur Aufrechterhaltung einer Temperatur eine elektrische Heizung in dem Schlauch vorgesehen sein, wobei deren Wirksamkeit maßgeblich vom Wirkungsgrad der elektrischen Beheizung abhängig ist und somit vom Kontakt zwischen einem Heizelement und der zu beheizenden Oberfläche innerhalb der Schlauchanordnung. Elektrisch beheizbare Schläuche finden in vielen technischen Gebieten Anwendungen. Dabei lässt sich ein Anstieg der Nachfrage nach besonders flexiblen Schlauchsystemen beobachten. Diese Systeme finden beispielsweise Anwendung im Rahmen der Automation, wie z.B. an Robotern in der Automobilindustrie.

Bei elektrisch beheizbaren Schläuchen ergeben sich als Grundanforderungen ein hohes Maß an Biege- und Torsionsfestigkeit bei gleichzeitiger langer Lebensdauer. Hinzu kommt gleichzeitig der Wunsch nach einer technisch ausgereiften und wirtschaftlichen Beheizung eines Schlauchsystems.

Ein beheizbares Schlauchsystem ist aus der GB 2 065 430 A bekannt. Dabei ist ein Innenschlauch mit einer Wärme erzeugenden Schicht ummantelt, in die eine Mehrzahl von elektrischen Leitern einbettet ist. Die Wärme erzeugende Schicht ist aus kohlenstoffdotiertem Kunststoff, sodass sie einen elektrischen Strom leitet, wenn eine elektrische Spannung zwischen zwei Leitern angelegt wird. Durch den ohmschen Widerstand der Schicht wird Wärme erzeugt, die an das in dem Schlauch geführte Medium abgegeben wird.

Die EP 0 312 204 A2 offenbart, bei einem elektrisch beheizbaren Schlauch ebenfalls ein elektrisch leitendes Polymer mit positivem Temperaturkoeffizienten (PTC) als Wärme erzeugende Schicht vorzusehen, wobei zwei Elektroden entgegengesetzter Polarität helixförmig angeordnet sind und jeweils in elektrischem Kontakt mit der Wärme erzeugenden Schicht stehen.

Aus der DE 20 2005 004 602 U1 ist ebenfalls eine beheizte Schlauchleitung für Flüssigkeiten bekannt, die eine mittlere Schicht aus einem elektrisch leitfähigem Polymer mit positivem Temperaturkoeffizienten aufweist. Zur Spannungsversorgung der als Heizelement dienenden, elektrisch leitende Polymerschicht sind zwei sich entlang des Schlauches erstreckende Leiterdrähte in die elektrisch leitende Polymerschicht eingebettet.

Problematisch an den aus dem Stand der Technik bekannten Schlauchsystemen ist allerdings, dass eine sehr große Gefahr besteht, dass die spannungsführenden elektrischen Leiter bei sehr starken und häufigen Zug-, Biege und Torsionsbeanspruchungen des flexiblen Schlauchs lokal den elektrischen Kontakt mit dem Heizelement verlieren. Auch bei Systemen, bei denen ein elektrischer Leiter selbst als Heizelement dient, ist der Kontakt zur Wärmeübertragung zwischen dem Leiter und einem das Medium führenden Innenschlauch bei starken Verformungen des Schlauchs häufig nicht gewährleistet.

Zudem kann in den Leiterabschnitten, in denen der Kontakt zwischen elektrischem Leiter und Heizelement bzw. Innenschlauch durch starke und häufige Zug-, Biege- und Torsionsbelastungen verloren gegangen ist, auf der Leiteroberfläche Korrosion auftreten. Diese Korrosion, die mit einem erhöhten Übergangswiderstand zwischen spannungsführendem Leiter und Heizelement einhergeht, reduziert die Wärmeerzeugung im entsprechenden Bereich des Innenschlauches und kann so teilweise minderbeheizte oder sogar unbeheizte Stellen erzeugen. Bei starken und häufigen Verformungen können die bisher bekannten Schläuche daher keine über die gesamte Schlauchlänge gleichmäßige Beheizung garantieren.

Es ist daher die Aufgabe der vorliegenden Erfindung, einen flexiblen, elektrisch beheizbaren Schlauch bereitzustellen, bei dem eine über die Schlauchlänge gleichmäßige. Beheizung selbst bei starken Verformungen des Schlauchs gewährleistet ist.

Diese Aufgabe wird erfindungsgemäß durch einen Schlauch mit den Merkmalen des Anspruchs 1 gelöst.

Der erfindungsgemäße flexible, elektrisch beheizbare Schlauch, der einen länglichen elektrischen Leiter aufweist, der sich in Schlauchrichtung helixförmig erstreckt, ist **dadurch gekennzeichnet, dass** der elektrische Leiter in eine Umflechtung eingebettet ist. Die Umflechtung weist dabei erste und zweite Stränge auf, wobei sich die ersten Stränge in Schlauchrichtung helixförmig in gleicher Windungsrichtung wie der elektrische Leiter erstrecken und sich die zweiten Stränge in Schlauchrichtung helixförmig in entgegengesetzter Windungsrichtung zum elektrischen Leiter erstrecken. Der Gangwinkel des sich helixförmig in Schlauchrichtung erstreckenden elektrischen Leiters, der ersten Stränge und der zweiten Stränge beträgt dabei zwischen 50° und 80°.

Der Begriff "helixförmig" beschränkt sich hierbei nicht nur auf eine Schraubenlinie auf einer zylindrischen Mantelfläche, sondern auf jegliche Schraubenlinienformen, die sich um ein längliches Volumen mit beliebiger Querschnittsform erstrecken. Zum Beispiel kann das von einer Helix im Sinne dieser Erfindung eingefasste Volumen hexagonal, oktogonal oder mit beliebig geformter Querschnittsform sein. Die Form und Größe der Querschnittfläche des von einer Helix im Sinne dieser Erfindung eingefassten länglichen Volumens muss auch nicht über dessen gesamte Länge konstant sein, sondern kann variieren.

Mit "Windungsrichtung" einer Helix im Sinne dieser Erfindung ist entweder in Erstreckungsrichtung des Schlauchs rechtsdrehend oder in Erstreckungsrichtung des Schlauchs linksdrehend gemeint, wobei diese beiden Windungsrichtungen hier als "entgegengesetzt" zueinander bezeichnet werden.

Der "Gangwinkel" $\alpha$ einer Helix im Sinne dieser Erfindung ist als

$$\alpha = \arctan\left(\frac{h}{U}\right)$$

definiert, wobei h die Ganghöhe der Helix in Erstreckungsrichtung des Schlauchs pro Umrundung des von der helix eingefassten Volumens und U der Umfang des eingefassten Volumens ist.

Der erfindungsgemäße Schlauch zeichnet sich gegenüber bekannten Systemen durch eine hohe Biegefrequenz, eine hohe Torsionsfestigkeit, eine hohe Zugstabilität, eine hohe Temperaturbeständigkeit und eine erhöhte Druckbeständigkeit aus. Die elektrisch oder Wärme leitende Verbindung zwischen dem elektrischen Leiter und einem Heizelement bzw. einem Innenschlauch wird auch bei sehr starken Verformungen des Schlauchs durch die Einbettung des elektrischen Leiters in die Umflechtung gewährleistet.

Durch den Aufbau der Umflechtung wird ein Verhalten des Schlauchverbunds erreicht, der eine hohe mechanische Festigkeit des Medium führenden Schlauchs unterstützt, d.h. in Grenzen wie ein Druckträger wirkt, beim Biegen, beim Ziehen und beim Verdrehen die Kräfte aufnimmt, und durch innerhalb der Umflechtung reversibel ablaufende Verschiebeprozesse eine stets elektrisch leitend bzw. Wärme leitende Anordnung zwischen elektrischem Leiter und Heizelement bzw. Innenschlauch garantiert.

Außerdem gewährleistet die Konstruktion der Umflechtung und die berechneten und vorhersehbaren Verschiebeprozesse der ersten und zweiten Stränge, dass die Spannungen innerhalb des Schlauchs reduziert sind, und die verschiedenen Schlauchmaterialien auch nach vielen Beheizungszyklen als Verbund in Kontakt bleiben.

Insbesondere durch den Gangwinkel im Bereich zwischen 50° und 80° wird eine besonders hohe Flexibilität des Schlauchs erreicht, ohne dass bei Verbiegungen die elektrisch oder Wärme leitende Verbindung des elektrischen Leiters mit dem Heizelement bzw. dem Innenschlauch verloren geht. Besonders bevorzugt liegt der Gangwinkel zwischen 65° ± 5°. Für diesen Gangwinkel ergibt sich ein optimaler Kompromiss aus Flexibiltät und Stabilität.

Es ist von Vorteil, wenn die ersten Stränge bezogen auf die Längsachse des Schlauchs eine größere radiale Ausdehnung haben als die zweiten Stränge. Mit radialer Ausdehnung bezogen auf die Längsachse des Schlauchs ist hier die Dicke einer Umflechtungsschicht aus ersten bzw. zweiten Strängen der Umflechtung gemeint. Die Wandstärke des Schlauchs kann dadurch wesentlich verringert werden, sodass eine zusätzliche Flexibilität erreicht wird, ohne die Stabilität zu verringern. Es ist sinnvoll, wenn die ersten Stränge eine radiale Ausdehnung bezogen auf die Längsachse des Schlauchs haben, die im Wesentlichen der radialen Ausdehnung bezogen auf die Längsachse des Schlauchs entspricht, die der elektrische Leiter hat. Damit kann der elektrische Leiter ohne radialen Überstand und ohne Bildung von unerwünschten Freiräumen in die Umflechtung eingebettet werden.

Die Umflechtung kann unterschiedlich dicht gewickelt sein. Es hat sich als besonders vorteilhaft herausgestellt, wenn die Umflechtung 70% bis 80% der Schlauchschicht belegt, auf der sich die Umflechtung erstreckt. Mit "Schlauchschicht" ist eine beliebige innere Schicht des Schlauchs gemeint, die mit der Innenseite der Umflechtung in Kontakt steht. Der restliche Anteil kann ganz oder teilweise mit elastischem Material, beispielsweise eines Heizelements, ausgefüllt werden oder als erwünschter Bewegungspielraum der Stränge frei bleiben.

Die Umflechtung selbst oder ein Teil dieser können selbst als Leiter oder Abschirmung dienen, wobei zumindest einer der ersten Stränge und/oder der zweiten Stränge der Umflechtung elektrisch leitend ist. Es können auch mehrere Umflechtungen vorgesehen sein, von denen mindestens eine aus ersten und/oder zweiten Strängen besteht, die sämtlich elektrisch leitend sind. Der elektrische Leiter selbst kann beispielsweise in Form eines Strangs der ersten Stränge der Umflechtung ausgebildet sein, der elektrisch leitend ist.

Der elektrische Leiter und/oder der mindestens eine elektrisch leitende Strang der ersten Stränge und/oder Strang der zweiten Stränge kann massiv oder aus Litzen bestehend ausgebildet sein als

- Draht aus rostfreiem Edelstahl, Stahl oder Metalllegierungen,

- Kupferdraht,
- verzinnter Kupferdraht,
- vernickelter Kupferdraht oder
- Drahtseil aus rostfreiem Edelstahl, Stahl oder Metalllegierungen.

Vorzugsweise werden hier Litzenleiter aus vernickeltem Kupferdraht verwendet, um einen wirksamen Schutz gegen Korrosion zu erhalten und die Kontaktsicherheit zwischen dem elektrischen Leiter und einem Heizelement auch unter extremer mechanischer Beanspruchung zu gewährleisten. Bei der Verwendung von Litzenleitern als elektrischer Leiter in Form eines Spannungsversorgungsleiters eines Heizelements sind diese feindrahtig ausgeführt, um durch ihre große Oberfläche einen optimalen Kontakt zum Heizelement zu gewährleisten.

Andererseits kann die Umflechtung oder ein Teil dieser auch erste Stränge und/oder der zweite Stränge aufweisen, die elektrisch nicht-leitend sind. Vorzugsweise weisen diese Stränge ein Material auf, das ausgewählt ist aus einer Gruppe bestehend aus:

- Glasseide,
- Mineralfaser,
- Aramid (Kevlar®),
- Polyester,
- thermoplastischem Elastomer wie z.B. thermoplastischem Polyether-Ester-Elastomer (TPEE), thermoplastischem Polyurethan-Elastomer (TPU) oder thermoplastischem Polyolefin (TPO),
- Polyethylen niedriger Dichte (LDPE), Polyethylen hoher Dichte (HDPE) oder Polypropylen (PP),
- Polyamid (PA),
- Fluorpolymer wie Polytetrafluorethylen (PTFE), Perfluoralkoxylalkan (PFA), Perfluor(-Ethylen-Propylen)-Kunststoff (FEP), Polyvinylidenfluorid (PVDF), Ethylen-Tetrafluorethylen (ETFE), Ethylen-Chlortrifluorethlyen (ECTFE) oder Polyimid (PI),
- Synthetischen Polymer wie Silikon,
- Technischem Kunststoff,
- einem Schaumwerkstoff aus diesen Materialien und
- einer Kombination dieser Materialien.

Diese Materialien haben zum einen besonders gute mechanische Eigenschaften im Hinblick auf Flexibilität, Beständigkeit, Stabilität und Elastizität. Zum anderen sind sie häufig leichter und bei gleichem Volumen stärker belastbar als elektrisch leitende Stränge aus Metall. Darüber hinaus erlauben die Oberflächeneigenschaften ein besonders reibungs- und verschleißarmes Gleiten der Stränge gegeneinander und gegenüber den Schlauchschichten, mit denen die Umflechtung innen- und/oder außenseitig in Kontakt steht. Vor allem Fluorkunststoffe wie FEP und PFA unterstützen diese Gleitfunktion in besonderem Maße.

Es ist von besonderem Vorteil, wenn die ersten Stränge und/oder zweiten Stränge der Umflechtung auf einer Schlauchschicht gleitend angeordnet sind. Bei starken mechanischen Belastungen kann sich die Umflechtung dadurch lokal verschieben, verdrehen und sich an die Verformungen anpassen. Prinzipiell kehrt die Umflechtung nach einer lokalen Verschiebung in die Ausgangsposition zurück, d.h. die Umflechtung ist optimalerweise reversibel elastisch. Die Umflechtung muss aber nicht nach jeder Verschiebung wieder die vorhergehende Position einnehmen, sondern kann auch in dieser verbleiben. Es wird lediglich sichergestellt, dass die notwendige elektrische oder Wärme leitende Verbindung erhalten bleibt.

Um dies zu erreichen, ist es vorteilhaft, wenn die Oberflächen der ersten Stränge und/oder zweiten Stränge der Umflechtung und/oder der Schlauchschicht, auf der die Umflechtung gleitend angeordnet ist, behandelt sind, um den Gleitwiderstand zu reduzieren. Solch eine Behandlung kann beispielsweise eine Beschichtung oder Ummantelung sein.

Die ersten und/oder zweiten Stränge selbst können Einzelfilamente, Schnüre, verdrillte oder zu Kordeln geformte Fäden oder Folien oder schmale Einzelfolien oder eine Kombination dieser aufweisen. Die ersten und/oder zweiten Stränge können untereinander das gleiche Material oder unterschiedliche Materialien aufweisen. Auch die Querschnittsform der ersten und/oder zweiten Stränge kann gleich oder unterschiedlich sein und ggf. über die Länge variieren. Die Stränge können auch zusätzlich mit Bändern als Folien-Gleitlagen ausgestattet sein.

In einer ersten Ausgestaltung der Erfindung dient der elektrische Leiter selbst als Heizelement. Dabei steht der elektrische Leiter in Wärme leitender Verbindung mit einem Innenschlauch, der dazu dient, ein zu beheizendes Medium in Schlauchrichtung zu führen. Die Einbettung des Leiters in die erfindungsgemäße Umflechtung stellt diese Wärme leitende Verbindung auch bei starken mechanischen Belastungen sicher.

In einer dazu alternativen Ausgestaltung dient der elektrische Leiter als einer von zwei Spannungsversorgungsleitern eines Heizelements. Dabei steht das Heizelement in Wärme leitender Verbindung mit einem Innenschlauch, der dazu dient, ein zu beheizendes Medium in Schlauchrichtung zu führen. Die Einbettung des Leiters in die erfindungsgemäße Umflechtung stellt hierbei in erster Linie den elektrisch leitenden Kotakt zwischen elektrischem Leiter und Heizelement auch bei starken mechanischen Belastungen sicher. Vorzugsweise sind beide Spannungsversorgungsleiter des Heizelements parallel zueinander helixförmig gewickelt und in die Umflechtung eingebettet. Dabei gewährleistet die Umflechtung zudem, dass der notwendige Abstand der Spannungsversorgungsleiter zueinander auch bei starken mechanischen Belastungen erhalten bleibt, um einen unerwünschten Kurzschluss zu verhindern.

Trotz eines vorzugsweise gewährten Bewegungs- und Verformungsspielraums der Umflechtung 5 bei Bewegungen des Schlauchs werden bestimmte Mindestabstände zwischen den Spannungsversorgungsleitern gewährleistet. Diese Mindestabstände entsprechen dabei mindestens den Anforderungen einschlägiger Normen in Bezug auf maximal erlaubte Kriechströme bzw. einzuhaltende Isolationswiderstände etwa bei Spannungen von 450 V bis 750 V zwischen den Leitern 11, 13. Bei kleineren Schlauchdurchmessern können die erlaubten Spannungen auch im Bereich von 300 V bis 500 V liegen. Die maximal erlaubte Spannung ist abhängig von dem durch die Umflechtung 5 gewährleisteten Mindestabstand zwischen den Leitern im ungünstigsten Belastungsfall.

Es ist von besonderem Vorteil, wenn das Heizelement ein Material aufweist, das einen positiven Temperaturkoeffizienten hat. Unter einem positiven Temperaturkoeffizienten wird verstanden, dass der spezifische Widerstand des Materials mit wachsender Temperatur zunimmt. Damit kann in einfacher Weise ein homogenes Temperaturprofil entlang des Schlauchs erreicht werden, da die Wärmeleistungsabgabe bei Erreichen einer bestimmten Betriebstemperatur selbstständig auf eine geringe Restleistung absinkt, sodass nur diejenigen Bereiche beheizt werden, die unterhalb dieser Betriebstemperatur liegen. Dies ist besonders bei starken Verbiegungen von Vorteil, da diese zu lokalen Erhöhungen oder Absenkungen der Wärmeleistungsdichte führen und das Heizelement bei Erreichen entsprechender Betriebstemperatur in diesen lokalen Bereichen nicht mehr heizt.

Vorzugsweise weist das Heizelement ein kohlenstoffdotiertes Material auf, das ausgewählt ist aus einer Gruppe bestehend aus:

- thermoplastischem Elastomer wie z.B. thermoplastischem Polyether-Ester-Elastomer (TPEE), thermoplastischem Polyurethan-Elastomer (TPU) oder thermoplastischem Polyolefin (TPO),
- Polyethylen niedriger Dichte (LDPE), Polyethylen hoher Dichte (HDPE) oder Polypropylen (PP),
- Polyamid (PA),
- Fluorpolymer wie Polytetrafluorethylen (PTFE), Perfluoralkoxylalkan (PFA), Perfluor(-Ethylen-Propylen)-Kunststoff (FEP), Polyvinylidenfluorid (PVDF), Ethylen-Tetrafluorethylen (ETFE), Ethylen-Chlortrifluorethlyen (ECTFE) oder Polyimid (PI),
- Synthetischem Polymer wie Silikon,
- Technischem Kunststoff,
- einem Schaumwerkstoff aus diesen Materialien und
- einer Kombination dieser Materialien.

Die Dotierung mit Kohlenstoff führt zu den elektrisch leitenden Eigenschaften dieser Materialien, die benötigt werden, um sie als elektrisches Heizelement zu verwenden. Die Dotierung ist dabei vorzugsweise derart gewählt, dass das Heizelement einen positiven Temperaturkoeffizienten hat. Die aufgeführten Materialen besitzen zudem aufgrund ihrer Zusammensetzung die Eigenschaft, hochfließfahig zu sein. Außerdem zeichnet sich das ausgewählte Material nach Stabilisation durch eine hohe Flexibilität aus, um so den unterschiedlichen mechanischen Beanspruchungen wie Biegen, Ziehen oder Verdrehen gerecht zu werden. Darüber hinaus sind die Materialien gegenüber metallischen Heizelementen leichter, sodass der Schlauch leichter ausgestaltet werden kann.

Das Material dieses Heizelementes ist zum einen so zusammengestellt, dass es im Produktionsprozess eine hohe Fließfähigkeit besitzt, sodass auch sehr kleine Bereiche innerhalb der Umflechtung ausgefüllt werden, die Stränge eingeschlossen werden und dauerhaft gebunden werden können und keine unerwünschten Freiräume entstehen. Zum anderen erhält das Heizelement nach Fertigstellung und Einsatz eine hohe mechanische Bindung an die Versorgungsleiter, die in der Umflechtung als Spannungsversorgung für das Heizelement eingeflochten sind und damit dauerhaft flexibel auf die mechanische Beanspruchung reagieren können.

In einer besonders vorteilhaften Ausführungsform der Erfindung sind zwei Umflechtungen vorgesehen, wobei zwischen der ersten und der zweiten Umflechtung das Heizelement angeordnet ist. Die Wärme leitende Verbindung zwischen Heizelement und dem Innenschlauch kann hierbei dadurch gewährleistet werden, dass das Heizelement bei der Schlauchherstellung hoch fließfähig ist, sodass die Zwischenräume zwischen den Strängen der Umflechtung durch das Heizelement gefüllt sind und eine Wärme leitende Verbindung nach innen erhalten bleibt. Vorzugsweise belegt nämlich die Umflechtung nur 70% bis 80% der Schlauchschicht, auf die sie aufgewickelt ist. Der restliche Anteil kann in dieser Ausführungsform ganz oder teilweise vom Heizelement eingenommen werden. Im Übrigen kann die innere Umflechtung auch besonders Wärme leitend ausgestaltet sein.

Ein weiterer Aspekt dieser Erfindung betrifft ein Verfahren zur Herstellung eines flexiblen, elektrisch beheizbaren Schlauchs, wobei ein elektrischer Leiter als einer von zwei Spannungsversorgungsleitern eines Heizelements dient, wobei das Heizelement in Wärme leitender Verbindung mit einem Innenschlauch steht, der dazu dient, ein zu beheizendes Medium in Schlauchrichtung zu führen. Das erfindungsgemäße Verfahren weist die folgenden Schritte auf:

- Umflechten einer Schlauchschicht mit einer Umflechtung und dem länglichen elektrischen Leiter,

  sodass dieser sich in Schlauchrichtung helixförmig erstreckt und in die Umflechtung eingebettet wird,
  sodass die Umflechtung erste und zweite Stränge aufweist,
  sodass sich die ersten Stränge in Schlauchrichtung helixförmig in gleicher Windungsrichtung wie der elektrische Leiter erstrecken,
  sodass sich die zweiten Stränge in Schlauchrichtung helixförmig in entgegengesetzter Win-

dungsrichtung zum elektrischen Leiter erstrekken und

der Gangwinkel des sich helixförmig in Schlauchrichtung erstreckenden elektrischen Leiters, der ersten Stränge und der zweiten Stränge zwischen 50° und 80° beträgt, und

- Aufbringen eines Heizelements aus kohlenstoffdotiertem Kunststoff, der einen positiven Temperaturkoeffizienten hat, sodass das Heizelement mit dem elektrischen Leiter in elektrisch-leitender Verbindung steht.

Vorzugsweise wird das Aufbringen des Heizelements durch Extrusion eines thermoplastischen Kunststoffs, durch Kunststoff-Bandumwicklung und Sinterung bei Temperaturen bis zu 580°C oder durch Verkleben von aufgewickelten Kunststoff-Bandlagen realisiert.

Im Folgenden wird die vorliegende Erfindung anhand der in den beigefügten Figuren gezeigten vorteilhaften Ausführungsformen detaillierter erläutert.

Figur 1 zeigt eine vorteilhafte Ausführungsform eines erfindungsgemäßen Schlauchs in einer perspektivischen Ansicht.

Figuren 2 bis 18 zeigen unterschiedliche vorteilhafte Ausführungsform eines erfindungsgemäßen Schlauchs jeweils im Querschnitt.

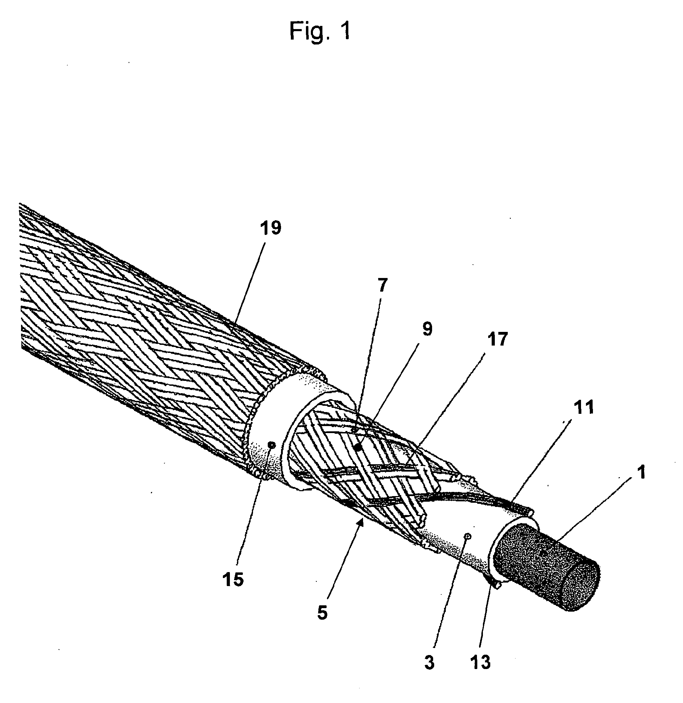

In Fig. 1 ist eine vorteilhafte Ausführungsform eines erfindungsgemäßen flexiblen, elektrisch beheizbaren Schlauchs abgebildet, der einen Innenschlauch 1 aufweist, wobei der Innenschlauch 1 dazu vorgesehen ist, ein fließfähiges Medium zu enthalten bzw. in Erstreckungsrichtung des Schlauchs zu führen. Um den Innenschlauch 1 ist eine Wärme leitende Schlauchschicht 3 angeordnet. Auf dieser Schlauchschicht 3 erstreckt sich eine Umflechtung 5, die in Form von ersten Strängen 7 und zweiten Strängen 9 in Schlauchrichtung helixförmig um die Schlauchschicht 3 gewickelt ist. Die ersten Stränge 7 der Umflechtung 5 erstrecken sich in Richtung des in Figur 1 abgebildeten Endes des Schlauchs linksdrehend helixförmig, wogegen sich die zweiten Stränge 9 der Umflechtung 5 entgegengesetzt dazu rechtsdrehend helixförmig zum abgebildeten Ende des Schlauchs erstrecken. Die ersten Stränge 7 und zweiten Stränge 9 überkreuzen sich daher.

In dem abgebildeten Beispiel sind die ersten Stränge 7 und die zweiten Stränge 9 miteinander verwoben, d.h. abwechselnd in Erstreckungsrichtung eines Strangs verläuft ein Strang der ersten Stränge 7 über einem Strang der zweiten Stränge 9 bzw. ein Strang der zweiten Stränge 9 über einem Strang der ersten Stränge 7. Dieses Verweben ist zwar vorteilhaft für die Stabilität der Umflechtung 5, aber nicht zwingend. Die ersten Stränge 7 können auch ganz oder streckenweise mehrmals hintereinander über oder unter den zweiten Strängen 9 verlaufen.

Es ist hierbei von Vorteil, wenn die ersten Stränge 9 bezogen auf die Längsachse des Schlauchs eine größere radiale Ausdehnung haben als die zweiten Stränge 11 (nicht in Figur 1 gezeigt). Mit radialer Ausdehnung bezogen auf die Längsachse des Schlauchs ist hier die Dicke einer von den ersten 9 bzw. zweiten Strängen 11 der Umflechtung 5 gebildeten Schicht gemeint. Die Wandstärke des Schlauchs kann dadurch wesentlich verringert werden, sodass eine zusätzliche Flexibilität erreicht wird, ohne die Stabilität zu verringern. Es ist sinnvoll, wenn die ersten Stränge 9 eine radiale Ausdehnung bezogen auf die Längsachse des Schlauchs haben, die im Wesentlichen der radialen Ausdehnung bezogen auf die Längsachse des Schlauchs entspricht, die die elektrischen Leiter 11, 13 haben. Damit können die elektrischen Leiter 11, 13 ohne radialen Überstand und ohne Bildung von unerwünschten Freiräumen in die Umflechtung 5 eingebettet werden. Die zweiten Stränge 9 können mit möglichst geringer radialer Ausdehnung ausgebildet werden, z.B. in Form von flachen Folien oder Streifen.

Der Gangwinkel der sich helixförmig in Schlauchrichtung erstreckenden ersten Stränge 7 und zweiten Stränge 9 beträgt in etwa 65°. Das bedeutet, dass sich die ersten Stränge 7 und zweiten Stränge 9 in einem spitzen Winkel von etwa 50° kreuzen und nicht in einem rechten Winkel von etwa 90° wie dies bei einem Gangwinkel von 45° der Fall wäre. Durch den Gangwinkel von 65° ist die Umflechtung 5 um ein Vielfaches flexibler als bei Gangwinkeln von 45° oder weniger. Andererseits würde ein höherer Gangwinkel zu weniger Stabilität in der Umflechtung 5 führen. Es hat sich dabei herausgestellt, dass je nach Anwendungsbedarf der Gangwinkel zwischen 50° für stabile Umflechtungen 5 und 80° für besonders flexible Umflechtungen 5 gewählt werden kann, um immer ein Mindestmaß an Stabilität und Flexibilität zu wahren. Aus dem gleichen Grund bildet die Umflechtung 5 einen in gewissem Maße lockeren Verbund von ersten Strängen 7 und zweiten Strängen 9, die 70% bis 80% der Schlauchschicht 3 belegen. Eine höhere Dichte von Strängen wäre zwar stabiler, aber unflexibler, wogegen eine geringere Dichte zwar flexibler, aber instabiler wäre.

Parallel zu den ersten Strängen 7, d.h. helixförmig in gleicher linksdrehender Windungsrichtung zum abgebildeten Ende hin, erstreckt sich ein elektrischer Leiter 11, der wie ein Strang der ersten Stränge 7 in die Umflechtung 5 eingebettet bzw. eingewoben ist. Der elektrische Leiter 11 dient in dieser Ausführungsform als einer von zwei Spannungsversorgungsleitern 11, 13 eines Heizelements 15. Das Heizelement 15 ist hierbei ein kohlenstoffdotierter Kunststoff, der während eines Extrudierschritts beim Herstellungsprozess des Schlauches hoch fließfähig ist und als eine Schicht auf die Umflechtung 5 aufgebracht wird. Das dann noch hoch fließfähige Heizelement 15 durchdringt teilweise die Umflechtung 5 und füllt zum Teil oder vollständig freie Zwischenräume zwischen der ersten Strängen 7 und/oder den zweiten Strängen 9 aus, bevor es als elastisch flexibler Kunststoff plastifiziert. Dadurch wird unter anderem ein elektrischer Kontakt zwischen dem elektrischen Leiter 11 und dem Heizelement 15 erreicht. Durch die Einbettung des elektrischen Leiters 11 in die Umflechtung 5 wird diese elektrische Verbindung allerdings auch bei starken mechanischen Beanspruchungen des Schlauchs dauerhaft und über die gesamte Länge des Heizelements 15 gewährleistet.

Es versteht sich, dass es von Vorteil ist, wenn der zweite elektrische Leiter 13 der zwei Spannungsversorgungsleiter 11, 13 eines Heizelements 15 in gleicher Weise in die Umflechtung 5 eingebettet ist wie der erste elektrische Leiter 11. Auch hier ist dann ein elektrischer Kontakt mit dem Heizelement 15 gewährleistet. Der erste elektrische Leiter 11 und der zweite elektrische Leiter 13 verlaufen in Form einer Doppelhelix parallel zueinander und haben hier einen größtmöglichen Abstand voneinander, um einen Kurzschluss auszuschließen. Die Einbettung in die Umflechtung 5 sorgt dafür, dass ein hierfür ausreichender Abstand auch bei starken mechanischen Beanspruchungen gewahrt bleibt. Die ersten Stränge 7 und die zweiten Stränge 9 sind in diesem Ausführungsbeispiel nicht-leitend ausgebildet, damit diese keinen Kurzschluss zwischen den Leitern 11, 13 verursachen, sondern die Leiter 11, 13 gegeneinander isolieren, damit bei angelegter Spannung der Strom ausschließlich über das Heizelement 15 fließt.

Wird nun eine Spannung zwischen den Spannungsversorgungsleitern 11, 13 angelegt, so fließt über den kohlenstoffdotierten Kunststoff des Heizelements 15 ein Strom zwischen den Leitern 11, 13. Durch den Ohmschen Widerstand des Heizelements 15 wird eine Wärmeleistung erzeugt. Die entstehende Wärme wird über die Wärme leitende Schlauchschicht 3 auf den Innenschlauch 1 übertragen, der die Wärme dann an das in ihm befindliche fließfähige Medium abgibt. Das Heizelement 15 steht also in einer Wärme leitenden Verbindung mit dem Innenschlauch 1. Diese Wärme leitende Verbindung kann über die Wärme leitenden Eigenschaften der Umflechtung 5 gegeben sein oder das Heizelement 15 kann die Umflechtung 5 auch durchdringen, sodass ein direkter Kontakt zur Wärme leitenden Schlauchschicht 3 besteht. Die Wärme leitende Schlauchschicht 3 ist nicht zwingend erforderlich, denn der Innenschlauch 1 kann auch selbst in Kontakt mit der Umflechtung 5 und/oder dem Heizelement 15 stehen.

Es ist von besonderem Vorteil, wenn der kohlenstoffdotierte Kunststoff des Heizelements 15 einen positiven Temperaturkoeffizienten hat, sodass der Widerstand des Heizelements 15 mit wachsender Temperatur ansteigt. Man geht zunächst von einem dynamischen thermischen Gleichgewicht in einem elektrisch beheizten Schlauch aus, der nicht bewegt wird und bei dem mittels konstanter Wärmeabgabe durch elektrische Beheizung ein im Schlauch mit konstanter Durchflussmenge fließendes Medium auf einer bestimmten Temperatur gehalten wird. Falls nun starke mechanische Belastungen wie beispielsweise Knicken, Verbiegungen und dergleichen, auf den Schlauch einwirken, ändert sich lokal die Wärmeabgabe an das im Innenschlauch 1 fließende Medium. Damit ändert sich auch lokal die Temperatur im Heizelement 15. Zumeist besteht die lokale Änderung der Wärmeabgabe in einem Wärmestau, der zu einer lokalen Temperaturerhöhung führt. Das Temperaturprofil entlang des Schlauchs wird also inhomogen, was bei bestimmten Anwendungen nicht erwünscht ist. Die lokale Temperaturerhöhung würde bei einem gewöhnlichen Ohmschen Widerstand mit negativem Temperaturkoeffizienten zu zu einer kontraproduktiven lokalen Erhöhung der Wärmeleistung im Heizelement 15 in einer ohnehin schon überhitzten lokalen Umgebung. Bei einem positiven Temperaturkoeffizienten des Heizelements 15 dagegen steigt der Widerstand mit der Temperatur an, sodass an Stellen mit erhöhter Temperatur durch mechanischen Wärmestau erheblich weniger Wärmeleistung vom Heizelement 15 produziert wird. Das Temperaturprofil entlang des Schlauchs bleibt dadurch trotz hoher mechanischer Belastungen homogener.

Im Übrigen weist der in Figur 1 gezeigte Schlauch neben dem elektrischen Leiter 11 eine weitere Leitung 17 auf, die parallel zum elektrischen Leiter 11 in die Umflechtung 5 helixförmig eingewebt bzw. eingebettet ist. Diese weitere Leitung 17 kann beispielsweise eine Sensorleitung oder eine Signalübertragungsleitung sein.

Zur Stabilisierung und zum Schutz gegen äußere Einflüsse ist das Heizelement 15 von einer Ummantelung 19 umgeben. Die Ummantelung 19 kann, wie dargestellt, ähnliche oder gleiche Eigenschaften haben wie die Umflechtung 5 oder auch abweichend ausgestaltet sein, z.B. einstückig extrudiert sein oder nur aus einer Umwicklungshelix bestehen. Die Ummantelung 19 kann auch aus metallischen Strängen ausgebildet sein, sodass die Ummantelung 19 als elektrische Abschirmung gegen äußere elektrische Felder dient.

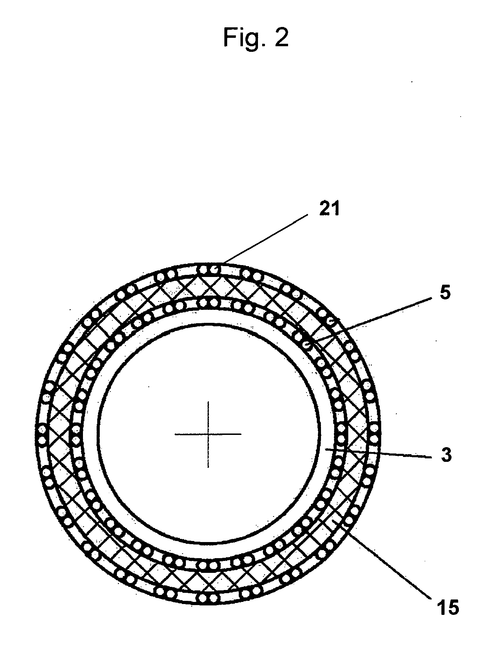

Wenn nicht explizit abweichend ausgeführt, lässt sich die in Fig. 1 exemplarisch gezeigte Art der Umflechtung 5 analog auf die Ausführungsbeispiele der Fig. 2 bis 20 übertragen, wenngleich bestimmte geometrische Merkmale der Umflechtung 5 in der Querschnittsansicht nicht erkennbar sind. Auch die vorteilhaften Eigenschaften des Heizelements 15 lassen sich auf alle Ausführungsformen übertragen.

Fig. 2 zeigt einen flexiblen, elektrisch beheizbaren Schlauch mit einer Wärme leitenden Schlauchschicht 3, einer ersten Umflechtung 5, einer zweiten Umflechtung 21 und einem Heizelement 15. Hier ist die Wärme leitenden Schlauchschicht 3 dazu geeignet und ausgestaltet, ein fließfähiges Medium in ihrem Inneren zu führen. Das Heizelement 15 ist dabei zwischen der ersten Umflechtung 5 und der zweiten Umflechtung 21 angeordnet. Bei der ersten Umflechtung 5 und der zweiten Umflechtung 21 ist jeweils zumindest einer der ersten Stränge und/oder der zweiten Stränge der Umflechtungen 5, 21 elektrisch leitend. Vorzugsweise sind alle Stränge beider Umflechtungen 5, 21 elektrisch leitend.

Wird nun zwischen den Umflechtungen 5, 21 eine Spannung angelegt, so fließt in radialer Richtung durch das zwischen den Umflechtungen 5, 21 angeordnete Heizelement 15 ein Heizstrom.

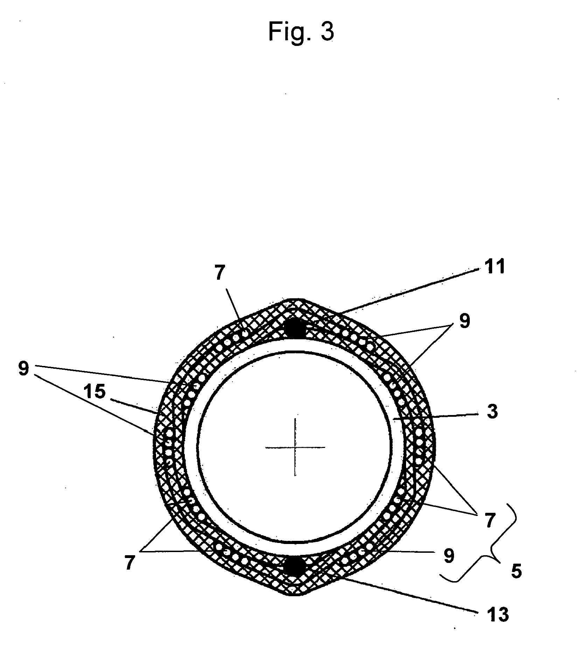

Im Ausführungsbeispiel gemäß Fig. 3 ist eine Umflechtung 5 um eine Wärme leitende Schlauchschicht 3 gewickelt, wobei die Umflechtung 5 die ersten Stränge 7 und die zweiten Stränge 9 aufweist. Die ersten Stränge 7 und die zweiten Stränge 9 sind hier in einem Halbschnitt gezeigt, mit dem die helixförmige Erstreckung angedeutet ist. Analog zur Ausführungsform aus Fig. 1 sind zwei elektrische Leiter 11, 13 als Spannungsversorgungsleiter für ein Heizelement 15 in Form einer Doppelhelix in die Umflechtung 5 eingebettet. Das Heizelement 15 wird hier durch eine äußere Schicht gebildet, die während eines Extrudierschrittes beim Herstellungsprozess des Schlauches hoch fließfähig ist und beim Aufbringen die Freiräume der Umflechtung 5 vollständig durchdrungen hat. Das Heizelement 15 ist hier durchsichtig dargestellt, um die Sicht auf den Halbschnitt der Umflechtung 5 zu erlauben. Der Heizstrom fließt hierbei im Wesentlichen tangential entlang des Heizelements 15 zwischen den Leitern 11, 13.

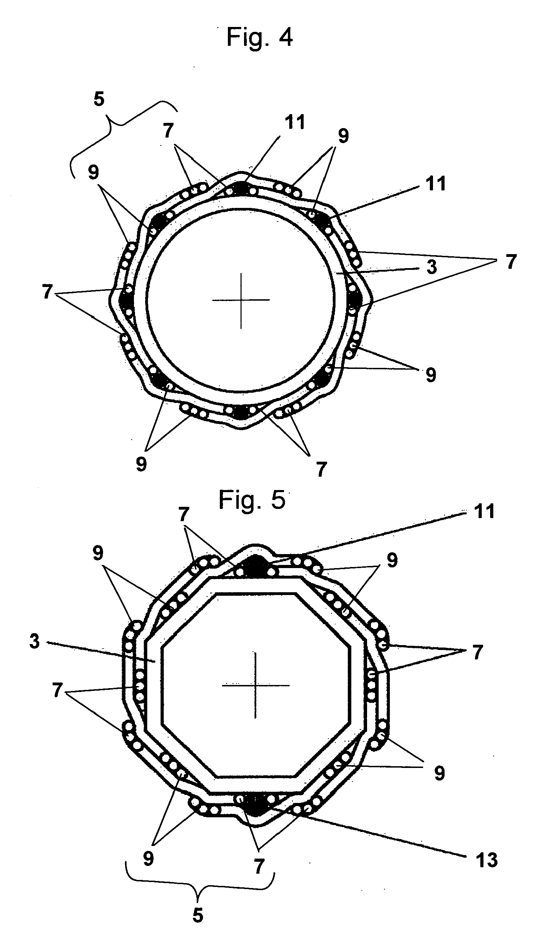

In Fig. 4 sind eine Vielzahl von elektrischen Leitern 11 in eine Umflechtung 5 eingebettet, die wie bereits in Fig. 3 gezeigt erste Stränge 7 und die zweite Stränge 9 aufweist, die in einem Halbschnitt gezeigt sind, um die helixförmige Erstreckung zu verdeutlichen. Hier dienen die elektrischen Leiter 11 selbst als Heizelement in Form von Heizleitern. Die Heizleiter 11 können hierbei aus kohlenstoffdotiertem Kunststoff ausgeführt sein und/oder in Serie miteinander geschaltet sein.

Fig. 5 zeigt einen zu den in Figuren 1 bis 4 gezeigten Ausführungsform sehr ähnlichen Schlauch, wobei in Fig. 5 der Schlauch einen oktogonalen Querschnitt hat. Bei diesem Schlauch kann zusätzlich ein Heizelement 15 als eigenständiges Element vorgesehen sein. Es kann allerdings auch einer oder es können beide der elektrischen Leiter 11, 13 selbst als Heizelement dienen, da sie in Wärme leitender Verbindung mit der Wärme leitenden Schlauchschicht 3 stehen, die hier dazu geeignet und ausgestaltet ist, ein fließfähiges Medium in ihrem Inneren zu führen.

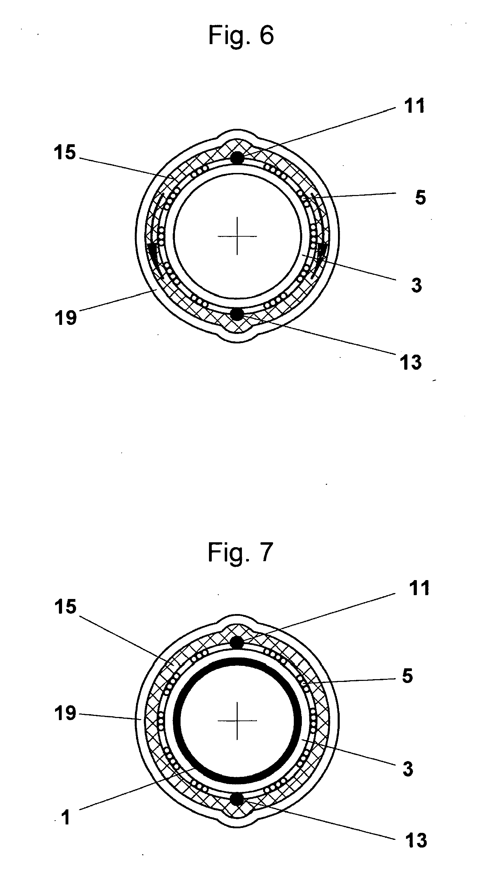

Die Fig. 6 und 7 zeigen einen zu der in Fig. 1 gezeigten Ausführungsform sehr ähnlichen Schlauch. In Fig. 7 ist gegenüber Fig. 6 ein auswechselbarer Innenschlauch 1 vorgesehen, wohingegen in Figur 6 die Wärme leitende Schlauchschicht 3 selbst dazu dient, ein fließfähiges Medium in sich zu führen. In beiden Ausführungsformen ist um die Wärme leitende Schlauchschicht 3 eine Umflechtung 5 mit zwei eingebetteten elektrischen Leitern 11, 13 angeordnet, und es befindet sich darum ein Heizelement 15. Nach außen ist der Schlauch mit einer einstückigen Ummantelung 19 geschützt. Die Pfeile in Fig. 6 deuten den Stromfluss vom elektrischen Leiter 11 durch das Heizelement 15 zum elektrischen Leiter 13 an, wenn eine elektrische Spannung zwischen den elektrischen Leitern 11, 13 angelegt wird.

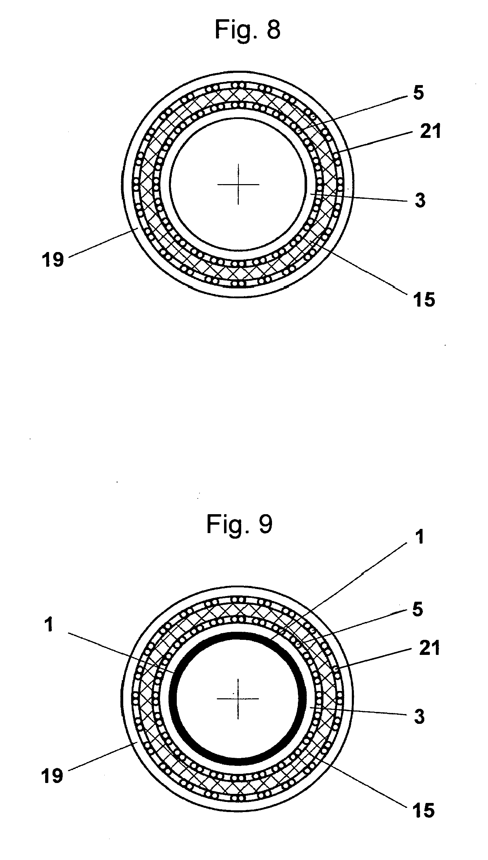

Die Fig. 8 und 9 unterscheiden sich von der in Fig. 2 gezeigten Ausführungsform lediglich in einer einstückigen Ummantelung 19, welche die äußere, zweite Umflechtung 21 umgibt. Im Fig. 9 ist zusätzlich noch ein auswechselbarer Innenschlauch 1 vorgesehen, um ein fließfähiges Medium in sich zu führen. Die weitere Umflechtung 21 dient hier als zusätzliche Druckträgerumflechtung, um die im Innern des Schlauchs entstehenden Druckkräfte besser aufnehmen zu können.

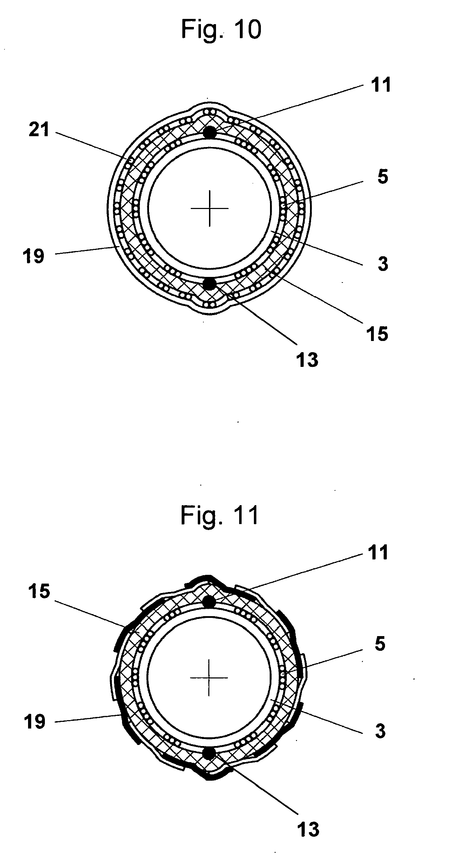

Die Ausführungsform aus Fig. 10 ist ähnlich zu der in Figur 10 gezeigten Ausführungsform, wobei jedoch die Stränge 7, 9 der inneren Umflechtung 5 und der äußeren Umflechtung 21 nicht elektrisch leitend sind. Zur Spannungsversorgung des Heizelements 15 sind in die erste Umflechtung 5 ein erster elektrischer Leiter 11 und ein zweiter elektrischer Leiter 13 eingebettet.

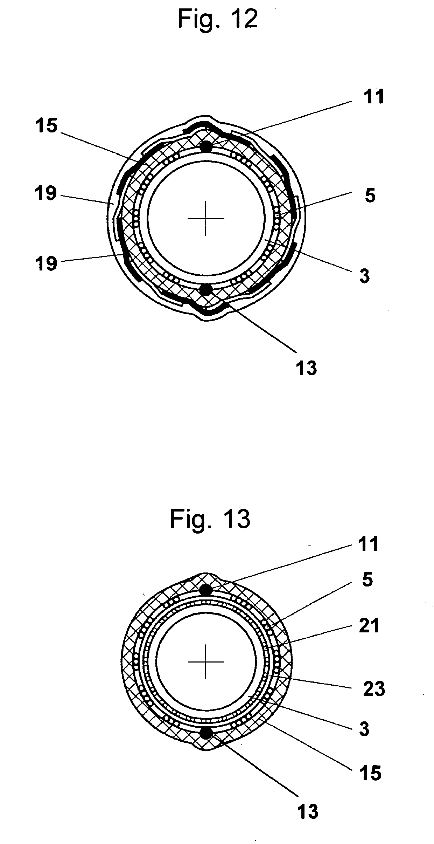

Fig. 11 zeigt ein zur Fig. 6 analoges Ausführungsbeispiel, bei dem die Ummantelung 19 nicht einstückig, sondern in Form einer helixförmigen Umwicklung von sich überlappenden Werkstoffbahnen ausgebildet ist. In Fig. 12 weist eine derartige Ummantelung 19 zusätzlich eine einstückige äußere Verbundschicht auf, welche die helixförmige Umwicklung von sich überlappenden Werkstoffbahnen einschließt.

Die Ausführungsform der Fig. 13 zeigt eine innere Umflechtung 21, die in direktem Kontakt zu der innersten, Wärme leitenden Schlauchschicht 3 steht und hier als Druckträgerschicht dient, damit der Schlauch dem inneren Druck des in ihm geführten Mediums standhält. Es folgt auf die innere Umflechtung 21 eine Isolierschicht 23, auf der wiederum eine äußere Umflechtung 5 angeordnet ist, die selbst elektrisch nicht-leitend ist, aber in die ein erster elektrischer Leiter 11 und ein zweiter elektrischer Leiter 13 eingebettet sind. Außen wird der Schlauch vom Heizelement 15 abgeschlossen, das in elektrischer Verbindung mit den Leitern 11, 13 steht.

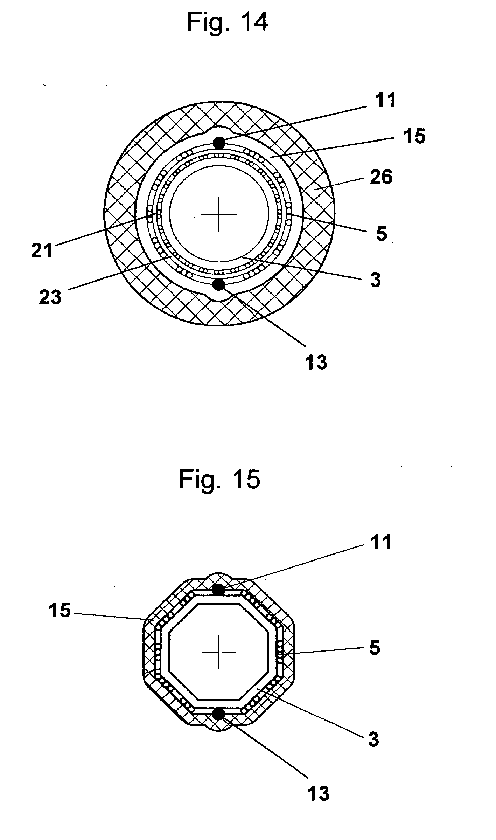

Im Ausführungsbeispiel von Fig. 14 ist die außen liegende Isolierschicht 26 aus geschäumtem Kunststoff gebildet. Innerhalb der Isolierschicht 26 befindet sich ein Heizelement 15, das von elektrischen Leitern 11, 13 mit Spannung versorgt wird und die äußere Umflechtung 5 umspült, in die die elektrischen Leitern 11, 13 eingebettet sind. Durch die äußere Isolierschicht 26 wird zusätzlich zu der elektrisch isolierenden Eigenschaft die Dämmwirkung des aufgeschäumten Materials ausgenutzt, um den Bedarf an Wärmeleistung zu minimieren. Zusätzliche Dämmstoffe können damit gespart werden, und ein höherer Wirkungsgrad bei möglichst geringem Schlauchdurchmesser wird erreicht. Die äußerste Schicht der Isolierschicht 26 kann auch verdichtet werden, um die für eine Außenhaut erforderliche mechanische Festigkeit zu erreichen. Dies reduziert zwar die Flexibilität gegenüber einer Konstruktion mit außen unverdichteter Schäumung, aber es lässt sich dadurch solch ein Schlauch ohne weiteren äußeren Schutz einsetzen.

Fig. 15 zeigt einen zu der in Fig. 5 gezeigten Ausführungsform sehr ähnlichen Schlauch, wobei in Fig. 15 der Schlauch ein Heizelement 15 aufweist, welches über die elektrischen Leiter 11, 13 gespeist wird und wobei der Schlauch einen oktogonalen Querschnitt hat.

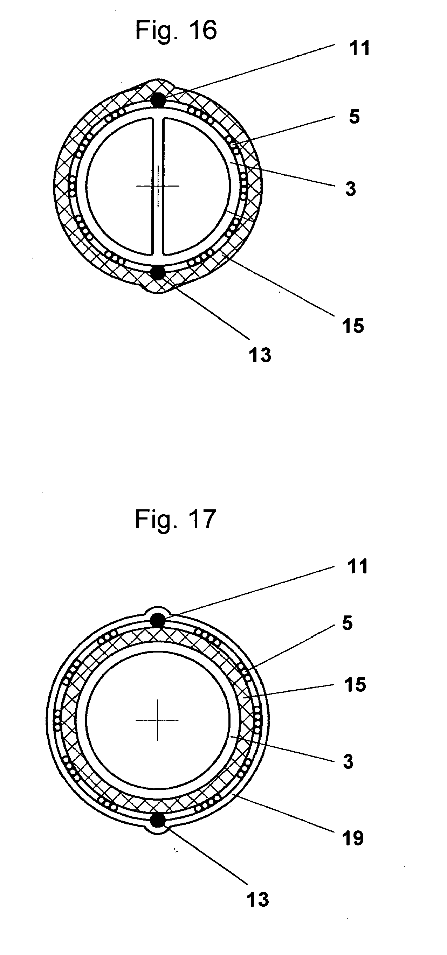

Die in Fig. 16 gezeigte Ausführungsform des Schlauchs weist zwei voneinander getrennte Kammern auf, die dazu ausgestaltet sind, jeweils ein fließfähiges Medium in Schlauchrichtung getrennt zu führen. Damit kann erreicht werden, dass zwei fließfähige Medien jeweils gleichzeitig der gleichen Wärmemenge beim Durchfluss ausgesetzt werden können, ohne dass die Medien im Schlauch vermischt werden. Es ist hier eine beliebige Anzahl von Kammern denkbar. Ansonsten entspricht diese Ausführungsform derjenigen von Fig. 15.

In Fig. 17 ist gezeigt, dass das Heizelement 15 auch direkt auf der Wärme leitenden Schlauchschicht 3 liegen kann und die Umflechtung 5 auf das Heizelement 15 gewickelt ist. Die in die Umflechtung 5 eingebetteten elektrischen Leiter 11, 13 haben dann einen elektrischen Kontakt zur Außenfläche des Heizelements 15. Nach außen hin ist die Umflechtung 5 von einer einstückigen Ummantelung 19 umgeben.

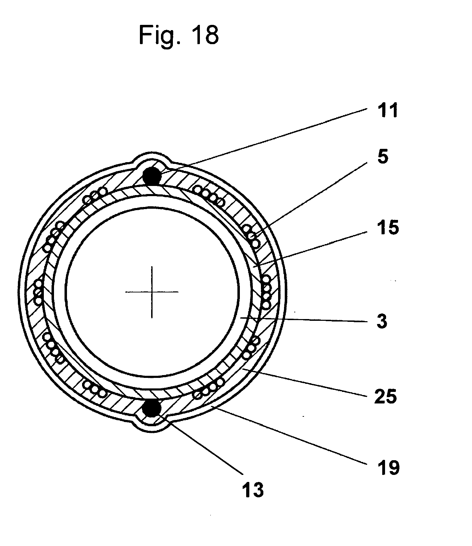

Die Ausführungsform der Fig. 18 weist ein erstes Heizelement 15 und ein zweites Heizelement 25 auf. Das erste Heizelement 15 ist direkt auf die Wärme leitende Schlauchschicht 3 aufgebracht und von einer Umflechtung 5 umwickelt, in die elektrische Leiter 11, 13 eingebettet sind, die elektrischen Kontakt zum ersten Heizelement 15 haben. Von außen ist die Umflechtung 5 durch das aufgebrachte zweite Heizelement 25 derart umgeben, dass auch das zweite Heizelement 25 mit den in die Umflechtung 5 eingebetteten Leitern 11, 13 elektrischen Kontakt hat. Nach außen hin ist das zweite Heizelement 25 von einer einstückigen Ummantelung 19 umgeben.

Alle in den Figuren gezeigten Merkmale der verschiedenen Ausführungsbeispiele lassen sich in beliebiger Form je nach Anwendungsbedarf kombinieren, um einen geeigneten erfindungsgemäßen Schlauch zu erhalten.

Allen dargestellten Ausführungsformen haben jedoch gemein, dass sie eine hohe Torsionsfestigkeit, eine hohe Zugstabilität, eine hohe Temperaturbeständigkeit und eine erhöhte Druckbeständigkeit haben. Außerdem ist gewährleistet, dass die elektrisch oder Wärme leitende Verbindung zwischen dem elektrischen Leiter und einem Heizelement bzw. einem Innenschlauch auch bei sehr starken Verformungen des Schlauchs durch die Einbettung des elektrischen Leiters in die Umflechtung sichergestellt ist.

**Patentansprüche**

1. Flexibler, elektrisch beheizbarer Schlauch mit einem länglichen elektrischen Leiter (11), der sich in Schlauchrichtung helixförmig erstreckt,
**dadurch gekennzeichnet, dass**
der elektrische Leiter in eine Umflechtung (5) eingebettet ist,

wobei die Umflechtung (5) erste und zweite Stränge (7, 9) aufweist,
wobei sich die ersten Stränge (7) in Schlauchrichtung helixförmig in gleicher Windungsrichtung wie der elektrische Leiter (11) erstrecken,
wobei sich die zweiten Stränge (9) in Schlauchrichtung helixförmig in entgegengesetzter Windungsrichtung zum elektrischen Leiter (11) erstrecken und
der Gangwinkel des sich helixförmig in Schlauchrichtung erstreckenden elektrischen Leiters (11), der ersten Stränge (7) und der zweiten Stränge (9) zwischen 50° und 80° beträgt.

2. Flexibler, elektrisch beheizbarer Schlauch nach Anspruch 1, wobei die ersten Stränge (7) bezogen auf die Längsachse des Schlauchs eine größere radiale Ausdehnung haben als die zweiten Stränge (9).

3. Flexibler, elektrisch beheizbarer Schlauch nach Anspruch 1 oder 2, wobei der Gangwinkel des sich helixförmig erstrekkenden elektrischen Leiters (11), der ersten Stränge (7) und der zweiten Stränge (9) 65° ± 5° beträgt.

4. Flexibler, elektrisch beheizbarer Schlauch nach einem der vorhergehenden Ansprüche, wobei zumindest einer der ersten Stränge (7) und/oder der zweiten Stränge (9) der Umflechtung (5) elektrisch leitend ist.

5. Flexibler, elektrisch beheizbarer Schlauch nach Anspruch 4, wobei der elektrische Leiter (11) in Form eines Strangs der ersten Stränge (7) der Umflechtung (5) ausgebildet ist, der elektrisch leitend ist.

6. Flexibler, elektrisch beheizbarer Schlauch nach einem der vorhergehenden Ansprüche, wobei zumindest einer der ersten Stränge (7) und/oder der zweiten Stränge (9) der Umflechtung (5) elektrisch nichtleitend ist.

7. Flexibler, elektrisch beheizbarer Schlauch nach Anspruch 6, wobei der mindestens eine elektrisch nichtleitende erste Strang (7) und/oder zweite Strang (9) ein Material aufweist, das ausgewählt ist aus einer Gruppe bestehend aus:

- Glasseide,
- Mineralfaser,
- Aramid (Kevlar®),
- Polyester,
- thermoplastischem Elastomer wie z.B. thermoplastischem Polyether-Ester-Elastomer (TPEE), thermoplastischem Polyurethan-Elastomer (TPU) oder thermoplastischem Polyolefin (TPO),

- Polyethylen niedriger Dichte (LDPE), Polyethylen hoher Dichte (HDPE) oder Polypropylen (PP),
- Polyamid (PA),
- Fluorpolymer wie Polytetrafluorethylen (PTFE), Perfluoralkoxylalkan (PFA), Perfluor(-Ethylen-Propylen)-Kunststoff (FEP), Polyvinylidenfluorid (PVDF), Ethylen-Tetrafluorethylen (ETFE), Ethylen-Chlortrifluorethlyen (ECTFE) oder Polyimid (PI),
- Synthetischen Polymer wie Silikon,
- Technischem Kunststoff,
- einem Schaumwerkstoff aus diesen Materialien und
- einer Kombination dieser Materialien.

8. Flexibler, elektrisch beheizbarer Schlauch nach einem der vorhergehenden Ansprüche, wobei die ersten Stränge (7) und/oder zweiten Stränge (9) der Umflechtung (5) auf einer Schlauchschicht gleitend angeordnet sind.

9. Flexibler, elektrisch beheizbarer Schlauch nach einem der vorhergehenden Ansprüche, wobei der elektrische Leiter (11) selbst als Heizelement dient und in Wärme leitender Verbindung mit einem Innenschlauch steht, der dazu dient, ein zu beheizendes Medium in Schlauchrichtung zu führen.

10. Flexibler, elektrisch beheizbarer Schlauch nach einem der vorhergehenden Ansprüche, wobei der elektrische Leiter (11) als einer von zwei Spannungsversorgungsleitern eines Heizelements (15) dient, wobei das Heizelement (15) in Wärme leitender Verbindung mit einem Innenschlauch steht, der dazu dient, ein zu beheizendes Medium in Schlauchrichtung zu führen.

11. Flexibler, elektrisch beheizbarer Schlauch nach Anspruch 10, wobei das Heizelement (15) ein Material aufweist, das einen positiven Temperaturkoeffizienten hat.

12. Flexibler, elektrisch beheizbarer Schlauch nach Anspruch 10 oder 11, wobei das Heizelement (15) ein kohlenstoffdotiertes Material aufweist, das ausgewählt ist aus einer Gruppe bestehend aus:

- thermoplastischem Elastomer wie z.B. thermoplastischem Polyether-Ester-Elastomer (TPEE), thermoplastischem Polyurethan-Elastomer (TPU) oder thermoplastischem Polyolefin (TPO),
- Polyethylen niedriger Dichte (LDPE), Polyethylen hoher Dichte (HDPE) oder Polypropylen (PP),
- Polyamid (PA),
- Fluorpolymer wie Polytetrafluorethylen (PTFE), Perfluoralkoxylalkan (PFA), Perfluor(-Ethylen-Propylen)-Kunststoff (FEP), Polyvinylidenfluorid (PVDF), Ethylen-Tetrafluorethylen (ETFE), Ethylen-Chlortrifluorethlyen (ECTFE) oder Polyimid (PI),
- Synthetischem Polymer wie Silikon,
- Technischem Kunststoff,
- einem Schaumwerkstoff aus diesen Materialien und
- einer Kombination dieser Materialien.

13. Flexibler, elektrisch beheizbarer Schlauch nach einem der Ansprüche 10 bis 12, mit einer ersten Umflechtung (5) und einer zweiten Umflechtung (21), wobei zwischen der ersten und der zweiten Umflechtung (5, 21) das Heizelement (15) angeordnet ist.

14. Verfahren zur Herstellung eines flexiblen, elektrisch beheizbaren Schlauchs nach einem der Ansprüche 10 bis 13 umfassend die folgenden Schritte:

- Umflechten einer Schlauchschicht mit einer Umflechtung (5) und einem länglichen elektrischen Leiter (11),

sodass dieser sich in Schlauchrichtung helixförmig erstreckt und in die Umflechtung (5) eingebettet wird,
sodass die Umflechtung (5) erste und zweite Stränge (7, 9) aufweist,
sodass sich die ersten Stränge (7) in Schlauchrichtung helixförmig in gleicher Windungsrichtung wie der elektrische Leiter (11) erstrecken,
sodass sich die zweiten Stränge (9) in Schlauchrichtung helixförmig in entgegengesetzter Windungsrichtung zum elektrischen Leiter (11) erstrecken und
der Gangwinkel des sich helixförmig in Schlauchrichtung erstreckenden elektrischen Leiters, der ersten Stränge (7) und der zweiten Stränge (9) zwischen 50° und 80° beträgt,

- Aufbringen eines Heizelements (15) aus kohlenstoffdotiertem Kunststoff, der einen positiven Temperaturkoeffizienten hat, sodass das Heizelement (15) mit dem elektrischen Leiter (11) in elektrisch-leitender Verbindung steht.

15. Verfahren nach Anspruch 14, wobei das Aufbringen des Heizelements durch Extrusion eines thermoplastischen Kunststoffs, durch Kunststoff-Bandumwicklung und Sinterung bei Temperaturen bis zu 580°C oder durch Verkleben von aufgewickelten Kunststoff-Bandlagen realisiert wird.

# Fig. 1

Fig. 2

# Fig. 3

## Fig. 4

## Fig. 5

## Fig. 6

## Fig. 7

# Fig. 8

5

21

3

19

15

# Fig. 9

1

1

5

21

3

19

15

## Fig. 10

## Fig. 11

Fig. 12

Fig. 13

## Fig. 14

## Fig. 15

## Fig. 16

## Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2065430 A
- EP 0312204 A2
- DE 202005004602 U1